# EUROPEAN PATENT APPLICATION

(11) **EP 2 343 634 A2**
(43) Date of publication of application: **13.07.2011**
(21) Application number: 10194833.9
(22) Date of filing: 14.12.2010
(51) Int. Cl.: G06F 3/042

(54) **Improvements in or relating to optical navigation devices**

(30) Priority: 11.01.2010 GB 1000347
(71) Applicant: STMicroelectronics (Research & Development) Limited, Marlow, Buckinghamshire SL7 1YL (GB)
(72) Inventor: Reigneau, Mathieu, 45200, Amilly (FR)
(74) Representative: Anderson, Angela Mary

(57) **Abstract**

An imaging device having a plurality of illumination paths directed to an imaging area to thereby illuminate the whole of the imaging surface, wherein the imaging area is adapted to generate frustrated total internal reflection of the illumination from the imaging surface, in the presence of an element in contact with some or all of the imaging surface.

## Description

### Field of the invention

The present invention relates to improvements in or relating to optical navigation devices, such as for example, optical mice.

### Background of the invention

Computer devices are becoming ever smaller and full computing functionality can be found on phones and smart phones and other personal digital assistants (PDA). As the computer devices become smaller so the various features of the computer devices must also become smaller. This includes a requirement for smaller input systems for the user to enter inputs into the device. One such input system is an optical navigation device. Many computer devices, large and small, are equipped with optical navigation devices. However, with the smaller computer devices, minimizing the size of the optical navigation device can often be restrictive and problematic.

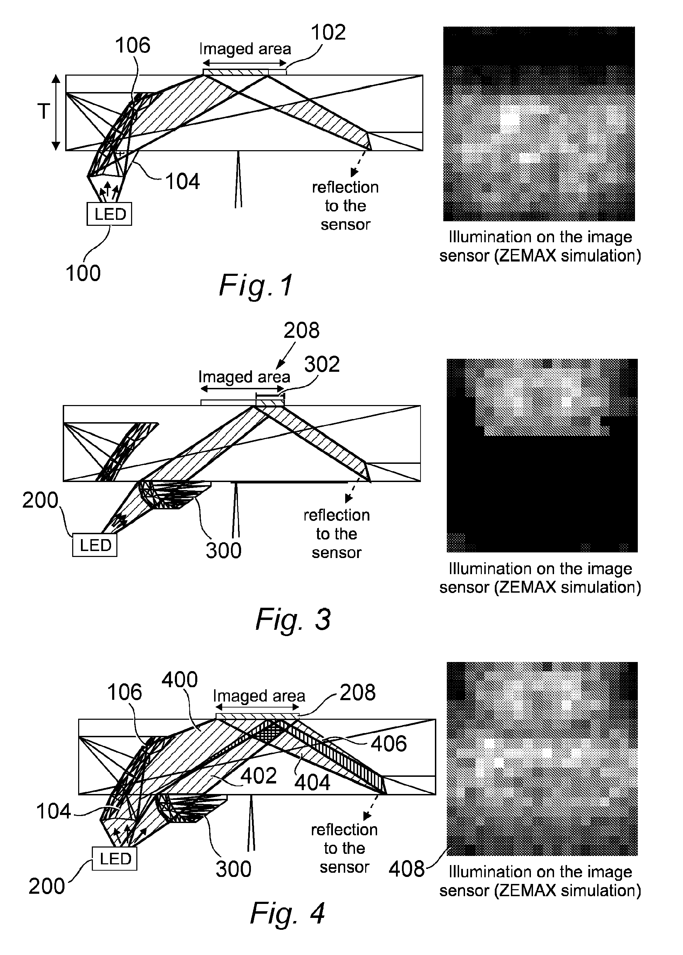

A number of devices have been proposed which offer thin thickness optical navigation devices. These have had some success but the design has generally not allowed for full illumination of the whole sensor as a result of the small size of the device. This in turn tends to make the optical navigation devices inefficient and on occasions incapable of operating. The inability to illuminate the full sensor is particularly relevant in the case of sensors that are less than 5mm thick. This is due to the fact that very expensive optics may be required in order to diverge a light beam sufficiently within the small width to illuminate the sensor. Even with the use of expensive optics the required divergence may still not be achievable. Figure 1 shows an example of this problem when a light emitting diode (LED) 100 is used to illuminate an imaging area 102 by means of an input lens 104 and a mirror 106. Due to the thickness T of the imaging device it is not possible to illuminate the whole of the imaging area 102 irrespective of the curvature of the mirror 106. As a result any illumination that is totally internally reflected from the imaging area by means of total internal frustrated reflection occurs only in the areas where the illumination has illuminated the imaging area 102. This makes the imaging area and the resultant sensed radiation non-optimal.

Making a thicker sensor may overcome some of this problem, but it is the reduction in size which is also sought in this domain which prevents this solution being useful.

### Objects of the invention

It is an object of the present invention to overcome at least some of the problems associated with the prior art.

It is a further object of the present invention to provide an optical navigation device having a thin sensor which has a greater overall illumination than previous devices.

### Summary of the invention

The present invention provides a method and system as set out in the accompanying claims.

According to one aspect of the present invention there is provided an imaging device having a plurality of illumination paths directed to an imaging area to thereby illuminate the whole of the imaging surface, wherein the imaging area is adapted to generate frustrated total internal reflection of the illumination from the imaging surface, in the presence of an element in contact with some or all of the imaging surface.

The present invention offers a number of benefits. These include a thin sensor having a thickness of less than 5mm and which can be formed from a single optical element. The optical element is able to fully illuminate an imaging area with cheap and simple optics despite the thinness of the imaging device. Other advantages will be apparent from the description.

### Brief description of the drawings

Reference will now be made, by way of example, to the accompanying drawings, in which:
Figure 1 is a cross-sectional diagram of an imaging device for an optical navigation device, in accordance with the prior art;
Figure 2 is an optical navigation device, in accordance with an embodiment of the present invention;
Figure 3 is a cross-sectional diagram of a proposed imaging device for an optical navigation device, in accordance with an embodiment of the present invention;
Figure 4 is a cross-sectional diagram of an imaging device for an optical navigation device, in accordance with an embodiment of the present invention.

### Detailed description of the preferred embodiments

The present invention relates to an imaging device associated with an optical navigation device. The optical navigation device is a mouse of small-scale which is intended to be operated by means of frustrated total internal reflection (F-TIR) in order to recognize the movement of a finger on an imaging area. This type of mouse is herein referred to as a finger mouse.

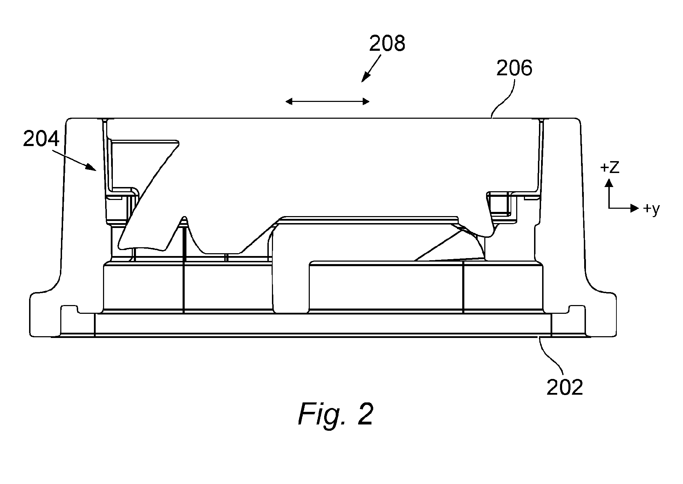

Figure 2 shows an example of a finger mouse 200 in accordance with an embodiment of the present invention. The finger mouse includes a base 202; an imaging device shown generally at 204; and an LED and sensor, both not shown per se. The top surface 206 of the imaging device 204 includes an imaging area 208 which is positioned at a predetermined location on the surface 206. It will be appreciated that the position of the imaging area will depend on the optical path or paths that light takes from the LED to the sensor. This will be described in greater detail below. Referring to figure 3, instead of adjusting the optics of lens element 104 and mirror 106 in figure 1, which will either add thickness to the imaging device or cost, due to more costly optics; the present invention takes a different approach. The present invention provides an additional lens element 300 which directs light from the LED to the imaging area 208 thereby illuminating area 302. Area 302 reflects the light to the sensor (not shown). By adding additional lens element 300 the overall illumination of the imaging area 208 is achieved as is shown with reference to figure 4.

In figure 4 light from the LED 200 is directed in two beams 400 and 402 by means of lens 104 and mirror 106 and additional lens element 300 respectively, to the imaging area 208. The illumination from a plurality of different illumination paths, in this case a dual illumination path, covers the whole of the imaging area. Frustrated total internal reflection then causes the dual illumination paths to be reflected (404, 406) from the imaging surface 208 to the sensor (not shown). The illumination on the image sensor is seen in the simulation picture 408. The description relates to a dual illumination but it will be appreciated that other pluralities of paths may work equally well and indeed may even facilitate still smaller thicknesses for the imaging device.

In use in an optical navigation system this imaging device enables total illumination of the imaging area 208 thereby improving the operation of the imaging device when used as a finger mouse. Movement of a finger anywhere on the imaging area 208 will be sensed by the present invention, whereas in the prior art movement would only be sensed in those areas where the imaging area is illuminated. The present invention thus provides a larger active area for user input and ensures that no user input is missed due to the fact that some of the imaging area is not illuminated. In addition, the present invention retains a thin and a compact design with simple optical elements that are cost-effective. The thickness of the imaging device is generally less than 5 mm and desirably 3 mm or less.

The imaging device can be formed from a single piece molding as shown in figure 2. The molding includes each of the individual optical elements shown in figure 4, namely lens element 104 and mirror 106; additional lens element 300; imaging area 208; and the optics necessary to transfer the reflected dual path illumination to the sensor. The imaging device could alternatively be made in other appropriate ways with different optical elements which produce the same optical effect. The imaging device may also be made from a number of different elements, rather than a single molding. The technique for forming the imaging device may include other techniques than molding, such as pasting optical elements with a matching index glue replication techniques, stamping, embossing or machining. The optical device is typically made from plastic based material such as PMMA Polycarbonate (such as Lexan), glass, Polyethylene or PVB.

The sensor is of any appropriate type and may be a CMOS sensor having an array of pixels for measuring reflected light at different locations of the imaging area 208 to produce an image as simulated at 400.

The LED may be of any appropriate type and may generate a source in the "optical" or non-optical ranges. Accordingly, reference to optics and optical are intended to cover wavelengths which are not in the human visible range.

The imaging device is intended for use in an optical navigation device; however it will be appreciated that the imaging device could be used in any appropriate device, for example an optical pushbutton; a fingerprint scanner; lab-on-chip devices or bio-optical sensors (e.g. for detecting chemi-fluorescent for medical or biotesting applications).

The optical navigation device may be used in any suitable devices such as a mobile or smart telephone, other personal or communications devices, a computer, a camera, a remote controller, access device or any other suitable device.

## Claims

1. An imaging device having a plurality of illumination paths directed to an imaging area to thereby illuminate the whole of the imaging surface, wherein the imaging area is adapted to generate frustrated total internal reflection of the illumination from the imaging surface, in the presence of an element in contact with some or all of the imaging surface.

2. The imaging device of claim 1, wherein the imaging device is less than 5mm thick.

3. The imaging device of claim 1 or claim 2, wherein the imaging device is less than 3mm thick.

4. The imaging device of any preceding claim, wherein the plurality of illumination paths comprise two illumination paths.

5. The imaging device of any preceding claim, wherein the plurality of illumination paths are produced from a single illumination source.

6. The imaging device of any preceding claim, wherein the plurality of illumination paths are reflected to a sensor from the imaging surface to detect movement of said element.

7. The imaging device of any preceding claim, wherein the plurality of illumination paths are directed to the imaging device by different optical elements.

8. The imaging device of any preceding claim, formed from a single formed element.

9. The imaging device of claim 8, wherein the single element is molded.

10. A device including an imaging device, according to any preceding claim.

11. The device of claim 10, in the form of an optical navigation device.

12. The device of claim 11, wherein the optical navigation device is a mouse.

13. The device of claim 12, wherein the mouse is a finger mouse.

14. An apparatus including the device of any one of claims 10 to 13.

15. The apparatus of claim 14, wherein the apparatus is a computer.

16. The apparatus of claim 14, wherein the apparatus is a phone.

17. The apparatus of claim 14, wherein the apparatus is a camera.
